# FASCICULE DE BREVET EUROPEEN

(11) **EP 0 736 415 B1**
(45) Date de publication et mention de la délivrance du brevet: **22.09.1999**
(21) Numéro de dépôt: 96400745.4
(22) Date de dépôt: 05.04.1996
(51) Int. Cl.: B60Q 3/04

(54) **Dispositif d'éclairage d'indicateur et tableau de bord incorporant celui-ci**
Beleuchtungseinrichtung für Anzeigeinstrumente in einem Armaturenbrett
Lighting device for dashboard indicating instruments

(30) Priorité: 05.04.1995 FR 9504033
(43) Date de publication de la demande: 09.10.1996
(73) Titulaire: MAGNETI MARELLI FRANCE, 92000 Nanterre (FR)
(72) Inventeur: Bezard, Jean-Jacques, 78400 Chatou (FR); Bonutto, Alain, 95220 Herblay (FR)
(74) Mandataire: Texier, Christian

(56) Documents cités:
- EP-A- 0 006 361
- DE-A- 3 704 574

## Description

La présente invention concerne le domaine des dispositifs d'éclairage d'indicateurs.

La présente invention trouve notamment application dans la réalisation de tableaux de bord pour véhicules automobiles.

Le rendement optique des moyens d'éclairage utilisés dans les tableaux de bord actuels pour véhicules automobiles est relativement bas.

Un dispositif d'eclairage d'indicateur ayant les caractéristiques du préambule de la revendication 1 est décrit dans le document EP-A-0 006 361.

La présente invention a pour but de perfectionner les dispositifs d'éclairage connus pour tableaux de bord, notamment en améliorant le rendement optique de ces moyens.

Un des buts de l'invention est notamment de permettre d'obtenir un fond coloré, avec la même puissance fournie par les moyens d'éclairage que celle résultant de moyens d'éclairage usuels utilisés dans les tableaux de bord classiques, sans fond coloré.

Ce but est atteint selon la présente invention grâce à un dispositif d'éclairage d'indicateur, notamment pour tableau de bord de véhicule automobile, comprenant au moins une source lumineuse, un réflecteur principal de type surface de révolution définie par une génératrice formée par une portion ellipse dont l'axe de révolution passe au moins sensiblement par un foyer qui coïncide lui-même au moins sensiblement avec le centre de la source lumineuse et un système optique secondaire placé au moins sensiblement au second foyer du réflecteur principal et adapté pour diriger le flux lumineux reçu du réflecteur principal, vers un lieu d'utilisation.

Selon une autre caractéristique avantageuse de la présente invention le réflecteur principal est de type ellipsoïde de révolution.

Selon une autre caractéristique avantageuse de la présente invention, le système optique secondaire placé au moins sensiblement au second foyer du réflecteur principal est lui-même une surface réflectrice de révolution.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 annexée représente une vue schématique en coupe d'un dispositif d'éclairage conforme à la présente invention,
- la figure 2 représente une vue schématique, face avant, d'un boîtier de tableau de bord comprenant plusieurs réflecteurs principaux,
- la figure 3 représente une vue schématique, face avant, d'un conduit de lumière incorporé dans un tableau de bord conforme à la présente invention,
- la figure 4 représente une vue schématique, face arrière, du même conduit de lumière,
- les figures 5, 6 et 7 représentent trois variantes de réalisation de dispositifs conformes à la présente invention, comprenant une lentille additionnelle entre la source lumineuse et le système optique secondaire placé au moins sensiblement au second foyer du réflecteur principal,
- les figures 8, 9 et 10 illustrent trois variantes de réalisation de système optique, la figure 9 bis étant une variante de la figure 9, et
- les figures 11 et 12 représentent respectivement une vue en coupe et une vue face avant d'un conduit formant guide optique conforme à une variante de la présente invention.

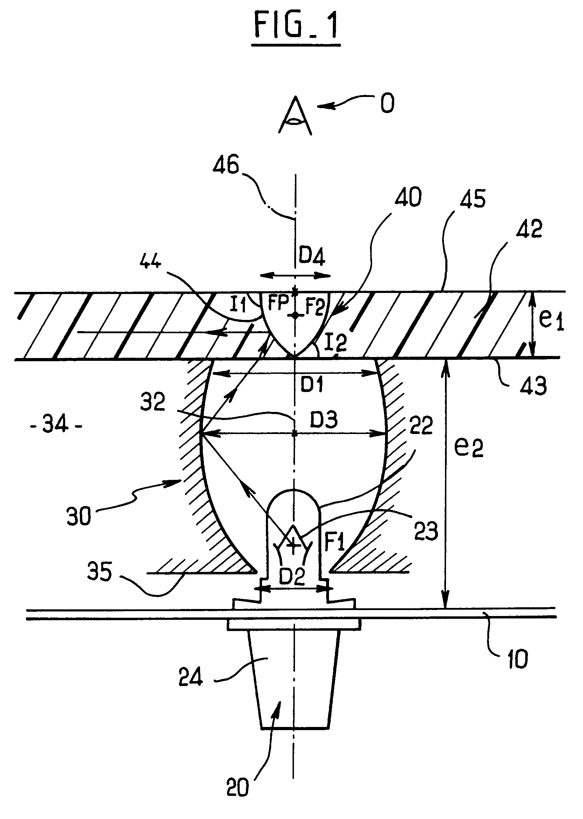

On a représenté sur la figure 1 annexée, une partie d'un tableau de bord de véhicule automobile, plus précisément un dispositif d'éclairage d'indicateur à cet effet, comprenant : un circuit imprimé 10 qui supporte une source lumineuse 20, un premier moyen 30 formé d'un réflecteur principal de type ellipsoïde de révolution et un moyen optique secondaire 40.

Le circuit imprimé 10 peut faire l'objet de nombreux modes de réalisation et ne sera donc pas décrit dans le détail par la suite. Ce circuit imprimé 10 peut être conçu pour supporter différents accessoires additionnels outre la source lumineuse 20, par exemple des composants d'un circuit de traitement de signal, des actionneurs d'aiguilles indicatrices par exemple à base de logomètres, de moteur pas à pas voire les moyens formant réflecteur principal de type ellipsoïde de révolution eux-mêmes, etc ...

La source lumineuse 20 peut également faire l'objet de nombreux modes de réalisation. Il s'agit de préférence d'une lampe à filament 22 ou d'une diode électroluminescente ou de tout moyen équivalent, placée dans une douille ou support 24 adapté pour être fixé sur le circuit imprimé 10. Le filament 23 de la lampe 22 est situé sur l'avant du circuit imprimé 10, c'est-à-dire côté utilisateur.

Le réflecteur principal 30 de type ellipsoïde de révolution est défini par une surface engendrée par la rotation d'une ellipse autour du grand axe passant par les foyers de l'ellipse. Il est positionné de sorte que l'un de ses foyers référencé F1 sur la figure annexée, coïncide au moins sensiblement avec le centre de la source lumineuse 20 ou du filament 23.

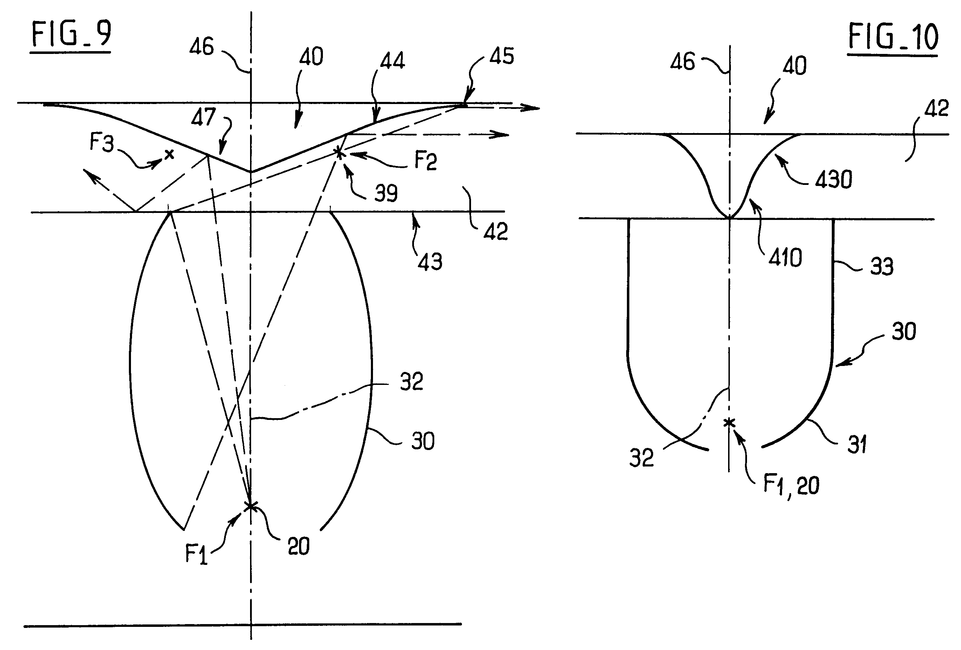

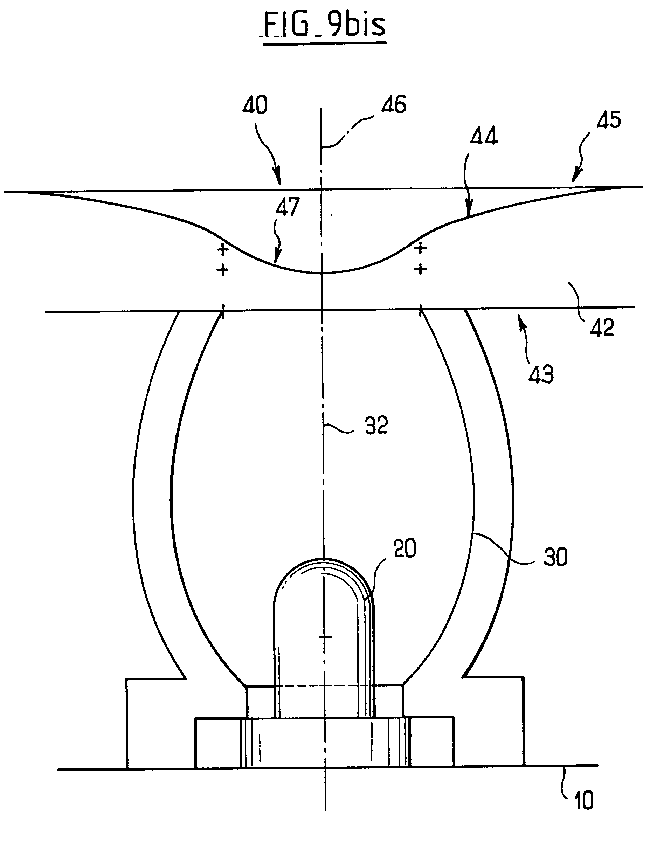

Cependant, comme on l'a évoqué précédemment et comme on le précisera par la suite, notamment en regard de la figure 9, l'invention n'est pas limitée à l'utilisation d'un réflecteur principal 30 de type ellipsoïde de révolution. D'une façon plus générale, l'invention s'étend, pour le réflecteur principal 30, à tout type de surface de révolution définie par une génératrice formée par une portion d'ellipse dont l'axe de révolution passe au moins sensiblement par un foyer qui coïncide lui-même au moins sensiblement avec le centre de la source lumineuse.

L'axe 32 du réflecteur principal 30 s'étend de préférence perpendiculairement au plan moyen du circuit imprimé 10. Par ailleurs, la source lumineuse 20 est centrée sur celui des deux foyers du réflecteur principal 30 situé le plus proche du circuit imprimé 10.

Ainsi la lumière émise par la lampe 20 se trouve focalisée au niveau du second foyer 22 de l'ellipsoïde 30, c'est-à-dire le foyer de ce réflecteur principal en ellipsoïde le plus éloigné du circuit imprimé 10.

Le réflecteur principal de type ellipsoïde de révolution 30 peut être formé par métallisation de la paroi d'une cavité en ellipsoïde de révolution formée dans une pièce 34, par emboutissage d'une pièce réflectrice, par exemple en métal, ou encore par réflexion totale sur la paroi d'une cavité en ellipsoïde de révolution ménagée dans une pièce optique 34, par exemple en matière plastique ou équivalent, ou par tout moyen équivalent.

Le cas échéant, cette cavité formant le réflecteur principal en ellipsoïde de révolution peut être obtenue en réalisant ledit élément 34 sous forme de plusieurs coquilles complémentaires, par exemple deux coquilles définissant chacune respectivement la moitié d'une ellipsoïde de révolution ou encore définissant respectivement les deux parties de ce réflecteur situées de part et d'autre d'une interface perpendiculaire à l'axe 32 et passant par la plus grande section droite du réflecteur principal 30.

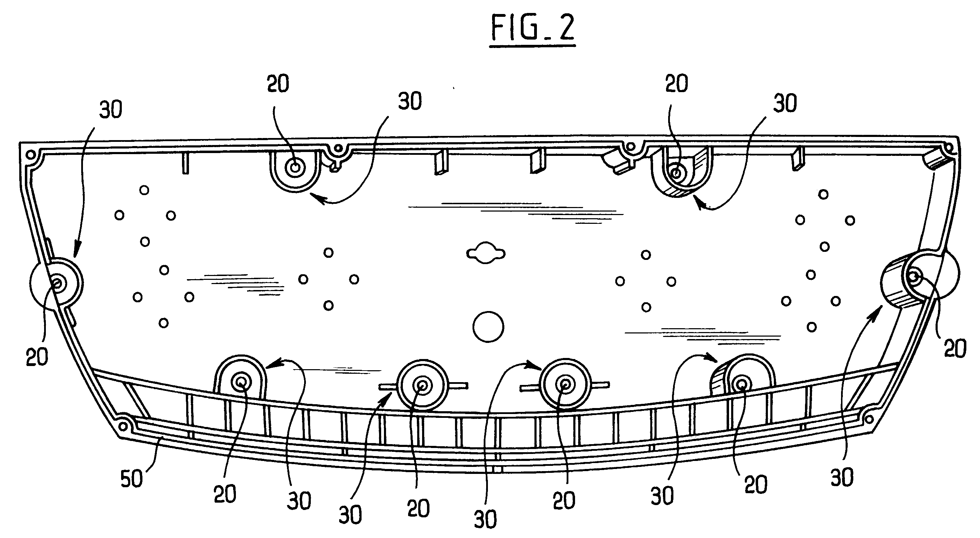

En pratique, il est prévu de préférence plusieurs réflecteurs principaux 30 dans un même tableau de bord comme on le voit sur la figure 2. Ces réflecteurs principaux 30 peuvent être supportés par exemple par le fond d'un boîtier 50, comme illustré sur la figure 2, ou encore par le circuit imprimé 10, comme indiqué précédemment, de préférence sur la périphérie extérieure du tableau de bord.

Le système optique secondaire 40 est quant à lui formé dans un élément 42 situé en avant de l'élément 34 précité, c'est-à-dire côté utilisateur. L'élément 42 est formé avantageusement d'un conduit de lumière, c'est-à-dire un panneau de matériau optiquement transparent, par exemple en matière plastique ou équivalent, plan et d'épaisseur constante.

Le système optique secondaire 40 a pour but préférentiel d'expanser le faisceau reçu du réflecteur principal 30 en redirigeant ce faisceau perpendiculairement à l'axe 32 dans la pièce 42.

Le système optique secondaire 40 est placé au moins sensiblement au niveau du second foyer F2 du réflecteur principal 30. Le système optique secondaire 40 est adapté pour diriger le flux lumineux reçu du réflecteur principal 30, vers un lieu d'utilisation.

De préférence, comme on l'a mentionné précédemment, le système optique secondaire 40 est formé d'une surface réflectrice de révolution 44 formée dans le conduit 42. La surface 44 est centrée sur un axe 46 coaxial à l'axe 32 précité.

La géométrie du système optique secondaire 40 doit tenir compte du fait que généralement la source optique n'est pas ponctuelle (notamment dans le cas d'un filament) et que les rayons renvoyés par le réflecteur principal 30 ne sont pas focalisés exactement sur le second foyer F2, mais au niveau d'une zone Fp différente (située en avant du second foyer F2) en raison d'une part de l'aspect non ponctuel de la source et d'autre part du passage du dioptre formé à l'interface de la paroi arrière 43 de l'élément 42, c'est-à-dire le dioptre formé par le milieu (généralement de l'air) dans le volume interne du réflecteur principal 30 et le matériau composant l'élément 42 (généralement un plastique transparent).

En pratique, la zone de convergence Fp des rayons renvoyés par le réflecteur principal 30 après franchissement du dioptre précité peut être située à l'intérieur ou à l'extérieur de l'élément 42.

Le réflecteur secondaire 44 peut être formé, de façon comparable au réflecteur principal 30, par métallisation de la surface d'une cavité ménagée dans l'élément 42, emboutissage d'une pièce réflectrice, ou encore par réflection totale sur cette paroi, ou tout moyen équivalent.

Selon un mode de réalisation avantageux, la génératrice du réflecteur secondaire 44 est formée sensiblement d'une parabole qui renvoie les rayons convergents vers le point Fp (lequel coïncide avec le foyer de la parabole) vers une direction horizontale, c'est-à-dire parallèle aux parois principales arrière 43 et avant 45 de l'élément 42, soit perpendiculairement aux axes 32 et 46, répartissant ainsi la lumière à l'intérieur du prisme composé par l'élément 42.

De là, ce flux peut être récupéré au niveau de sites d'utilisation répartis sur le conduit 42, par exemple pour l'éclairage d'aiguilles indicatrices, ou encore de plages colorées visualisant par exemple des échelles de valeurs associées à de telles aiguilles, ou encore des témoins d'alerte ou équivalent.

Les rayons réfléchis par le réflecteur secondaire 40 peuvent être renvoyés vers le lieu d'utilisation par des prismes ou équivalents ménagés dans l'élément 42, ou encore être renvoyés vers la face avant 45 du conduit 42 par un moyen diffuseur prévu sur la face arrière 43 de cet élément 42, par exemple un revêtement de peinture blanche déposé sur la face arrière 43 du conduit 42 pour rediffuser la lumière provenant du réflecteur secondaire 44 vers la face avant 45, en direction par exemple d'un cadran imprimé déposé contre cette face avant 45.

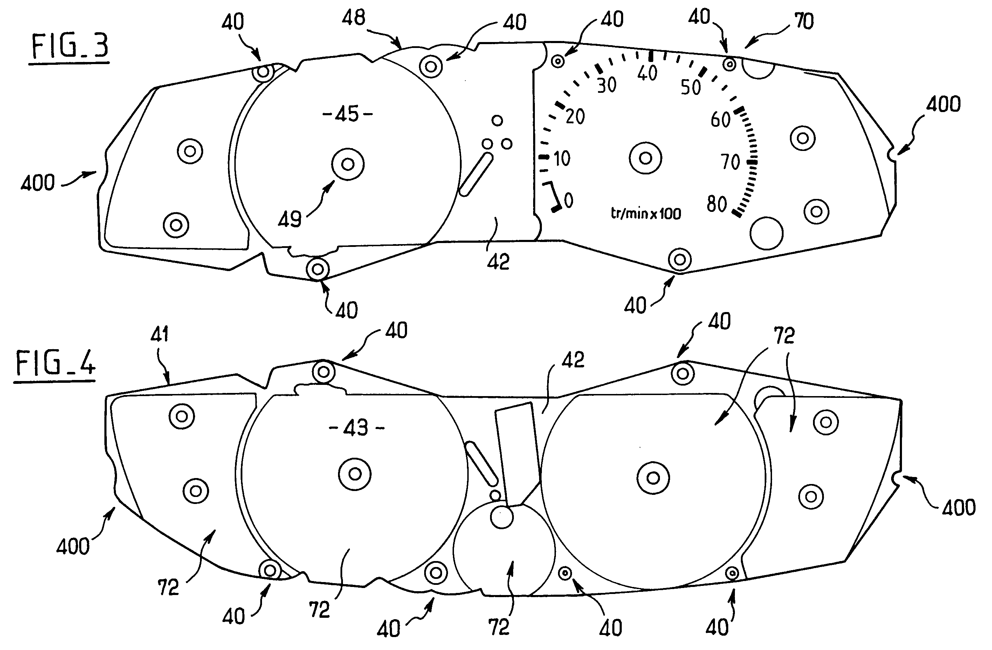

Les plages colorées, ou témoins d'alerte précités, peuvent être formés dans un cadran (réalisé à base d'une feuille de matière plastique) rapporté de façon classique sur la face avant du conduit 42. Cependant de préférence selon l'invention, ces plages colorées et témoins d'alerte sont formés par impression directe sur la face avant du conduit 42, comme on l'a illustré sur la droite de la figure 3, sous la référence générale 70. Bien entendu, l'illustration donnée à cet effet sur la figure 3 ne doit pas être considérée comme limitative.

On a illustré schématiquement sur la figure 4 des plages 72 de peinture blanche déposées sur la face arrière du guide 42, en regard de cadrans, témoins d'alerte ou équivalents prévus sur la face avant dudit guide 42.

Ces plages 72 peuvent être formées à l'aide de toute technique connue de l'homme de l'art, en particulier par tramage.

Sur les figures annexées, on a symbolisé l'oeil d'un utilisateur, par exemple le conducteur d'un véhicule automobile, sous la référence O.

Selon une variante de réalisation, la surface de révolution du système optique secondaire 40 peut être formée d'un cône ou d'une surface intermédiaire entre le cône et une surface parabolique.

Là encore, le système optique secondaire 40 peut être formé par assemblage de plusieurs coquilles, par exemple deux coquilles définissant chacune une moitié de réflecteur de révolution, située respectivement de part et d'autre de l'axe 46, ou encore respectivement deux éléments complémentaires situés de part et d'autre d'un plan orthogonal à l'axe 46.

Selon un mode de réalisation particulier et bien entendu non limitatif, le dispositif d'éclairage d'indicateur conforme à la présente invention peut répondre aux dimensions suivantes :
- épaisseur e1 du conduit 42 : 6mm,
- épaisseur de l'élément 34 : 19mm,
- diamètre d'ouverture D1 du réflecteur principal 30 en ellipsoïde de révolution au niveau de la face arrière 43 du conduit 42 : 15,3 mm,
- diamètre d'ouverture D2 du même réflecteur principal 30 au niveau de la face arrière 35 de l'élément 34 : 8mm,
- plus grand diamètre D3 de ce réflecteur principal 30 : 17,28mm,
- diamètre d'ouverture D4 du réflecteur secondaire 40 au niveau de la face avant 45 du conduit 42 : 6mm,
- inclinaison I1 de la génératrice de la surface parabolique de réflexion 44 par rapport à la face avant 45 du conduit 42 : 90°, et
- inclinaison I2 de la génératrice parabolique de ce réflecteur secondaire 44 par rapport à la face arrière 43 du conduit 42 : 45°.

Bien entendu la présente invention n'est pas limitée au mode de réalisation particulier qui vient d'être décrit mais s'étend à toute variante conforme à son esprit.

Par ailleurs, la présente invention s'étend également aux tableaux de bord incorporant un tel dispositif d'éclairage d'indicateurs.

L'homme de l'art comprendra aisément que la structure du dispositif d'éclairage conforme à la présente invention permet de récupérer quasi-intégralement le flux lumineux émis par la source d'éclairage 20.

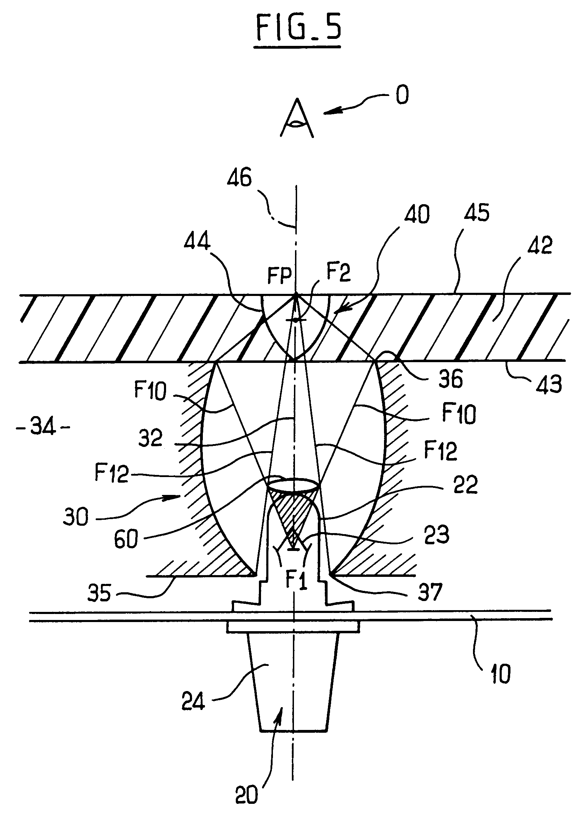

On a représenté sur les figures 5 à 7 trois variantes de réalisation selon lesquelles une lentille 60 est intercalée entre la source lumineuse 20 et le système optique secondaire 40.

La lentille 60 est centrée sur l'axe reliant les foyers F1 et F2 précités.

Elle a pour fonction de focaliser sur la zone Fp précitée, ou au moins au voisinage de celle-ci, le faisceau de rayons émis par la source 20 directement en direction de système optique secondaire 40, sans être renvoyé par le réflecteur principal 30.

Selon la figure 5, la lentille 60 est formée d'un élément structurellement indépendant de la source 20, du réflecteur principal 30 et du système optique secondaire 40 et supportée par l'un de ceux-ci par tous moyens appropriés.

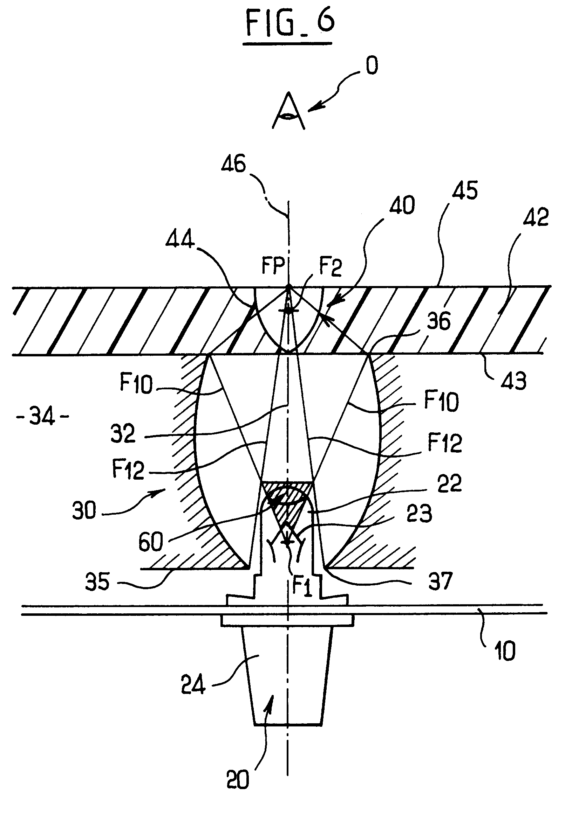

Selon la figure 6, la lentille 60 est intégrée dans le globe de verre de la source 20.

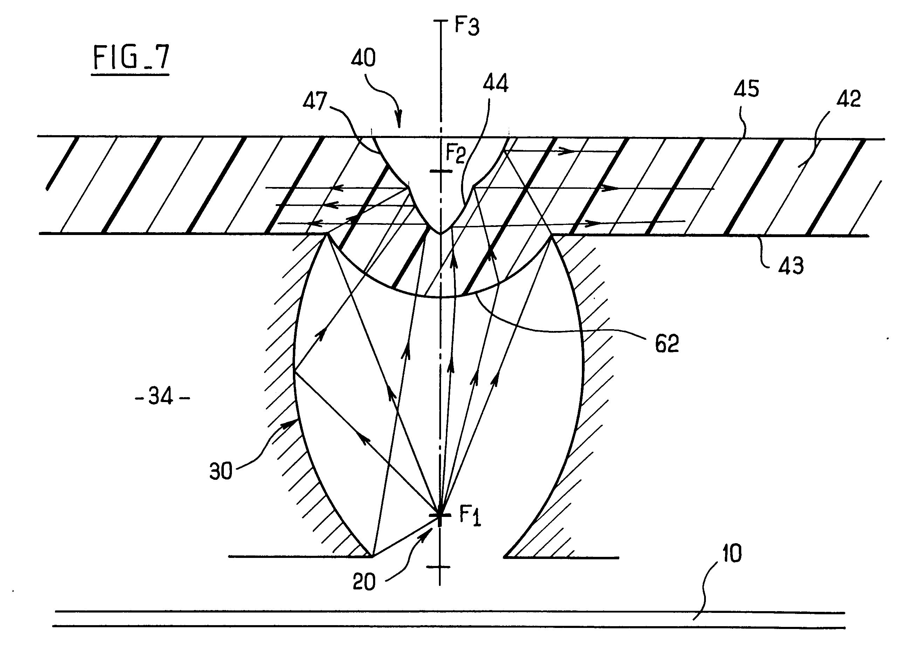

Selon la figure 7, la lentille 60 est solidaire, et de préférence venue de moulage ou d'usinage, sur la face arrière 43 du guide constituant le système optique secondaire 40.

Selon une autre variante, la lentille 60 pourrait être solidaire du réflecteur principal 30. On notera que dans le cadre des variantes de réalisation illustrées sur les figures 5 et 6, la lentille 60 est de préférence placée au niveau d'un cone (hachuré sur les figures 5 et 6) dont le sommet est formé par le foyer F1 qui coïncide avec la source 20 et dont la base est délimitée par le cercle défini par les points d'intersection d'une part des rayons F10 émis par la source 20 qui atteignent le bord extrême avant 365 du réflecteur principal 30, adjacent au système secondaire 40, et d'autre part les rayons F12 renvoyés par le bord extrême arrière 37 du réflecteur principal 30, en direction de la zone Fp.

De préférence, la lentille 60 est placée au nieau de la base du cone précité.

L'homme de l'art comprendra qu'ainsi la lentille 60 ne perturbe pas le cheminement des rayons renvoyés par le réflecteur principal 30 en direction de foyer F2 ou de la zone Fp. Mais cependant la lentille 60 permet de localiser le faisceau émis par la source 20 dans le cone central échappant au réflecteur principal 30.

Dans le cadre de la figure 7, la lentille 60 peut être formée par exemple d'une calotte sphérique, ou sensiblement sphérique, au moins sensiblement centrée sur le second foyer F2 du réflecteur principal 30. Ainsi les rayons renvoyés par le réflecteur principal 30 ne sont pas déviés au moins de façon significative, lorsqu'ils traversent la face d'entrée 62 de la lentille 60.

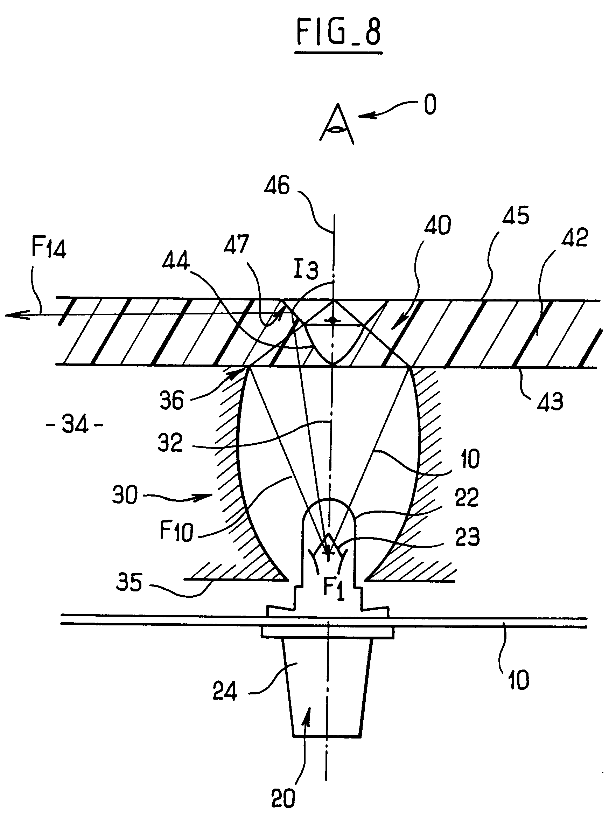

On a illustré sur la figure 8 une variante de réalisation du système optique secondaire 40, selon laquelle, en avant du réflecteur secondaire 44 de type parabolique adapté pour dévier parallèlement au guide 42 les rayons issus du réflecteur principal 30, il est prévu une calotte cylindrique 47 conçue pour dévier également au moins sensiblement parallèlement au guide 42, les rayons F14 issus directement de la source 20, sans être déviés par le réflecteur principal 30.

Cette calotte 47 peut être formée par exemple par une génératrice rectiligne, donc en forme de cone, avec une inclinaison 13 de l'ordre de 45° par rapport à l'axe des foyers F1, F2 (de préférence une inclinaison I3 supérieure à 45° pour tenir compte de la réfraction lors du franchissement de la face arrière 43 du guide 42).

La calotte 47 peut faire elle-même l'objet de diverses variantes. En particulier elle peut être délimitée par une génératrice non rectiligne mais incurvée, par exemple parabolique, pour tenir compte de l'incidence variable de rayons issus de la source 20, sans être renvoyés par le réflecteur principal 30.

La calotte 47 représentée sur la figure 8 est placée en avant et sur l'extérieur du cercle délimité par l'intersection des rayons F10 provenant du bord extrême avant 36 du réflecteur principal 30 et la calotte 44.

En variante, comme on l'a illustré sur la figure 7, la calotte la plus avant 47 peut être adaptée pour récupérer une partie des rayons renvoyés par le réflecteur principal 30.

On a ainsi représenté sur la figure 7, un système optique secondaire 40 qui comprend une première surface de révolution 44 à génératrice parabolique, adjacent à la face arrière 43 du guide 42, adaptée pour renvoyer parallèlement au guide 42 les rayons qu'elle reçoit en provenance du réflecteur principal 30, et une seconde surface de révolution 47 à génératrice parabolique, adjacente à la face avant 45 du guide 42, adaptée pour renvoyer parallèlement au guide 42 les rayons qu'elle reçoit en provenance de la source 20, sans transiter par le réflecteur principal 30.

Les rayons issus directement de la source 20 qui atteignent la première calotte 44 sont renvoyés sensiblement parallèlement au guide 42. Il en est de même pour les rayons issus du réflecteur principal 30 qui atteignent la seconde calotte 47.

On notera que le contour 41 du guide 42 peut être défini au moins localement par des tronçons d'ellipses 48 dont un premier foyer coïncide avec l'axe F1-F2, tandis que le second foyer coïncide au moins sensiblement avec un site d'utilisation, par exemple un moyen de prisme 49 adapté pour l'éclairage d'une aiguille indicatrice.

Comme on le voit à l'examen de la figure 2, certains au moins des réflecteurs principaux 30 prévus sur le tableau de bord peuvent être formés non pas de pièces de révolution sur 360°, mais de pièces couvrant un angle limité, inférieur à 360°, autour de l'axe passant par les foyers F1 et F2.

Bien entendu, le système optique 40 doit être adapté en conséquence. Le cas échéant, ces moyens 40 peuvent être formés d'un simple plan ou d'une calotte incurvée en bordure de la pièce 42, en regard du réflecteur principal 30, comme schématisé sur la figure 3 sous la référence 400.

Selon une autre caractéristique avantageuse de la présente invention, il est prévu un écran thermique entre la source lumineuse 20 et les cadrans ou impressions 70. Un tel écran thermique peut être formé d'un révêtement de surface, par exemple d'une peinture sélective, réfléchissant les infrarouges mais transparente aux rayonnements visibles, déposée sur la face arrière 43 du conduit 42.

Selon une autre caractéristique avantageuse de la présente invention, l'un au moins du réflecteur principal 30 et/ou du système secondaire 40 est défini non pas par une surface à courbure continue mais par une juxtaposition de facettes. Cette disposition permet un certain étalement du faisceau et évite la formation de points ou zones de trop forte concentration d'éclairage sur la face avant du tableau de bord.

La lentille 60 peut faire l'objet de nombreuses variantes. Il peut s'agir par exemple d'une lentille de Fresnel ou d'une lentille holographique.

Selon une autre caractéristique avantageuse de l'invention, le réflecteur principal 30 peut être muni d'un revêtement dichroïque adapté pour laisser passer les infra-rouges afin d'éviter un échauffement trop important résultant de la focalisation de ceux-ci.

On va maintenant décrire la variante de réalisation représentée sur la figure 9.

On retrouve sur cette figure 9 une source lumineuse 20, un réflecteur principal 30 et un système secondaire 40 formé dans une pièce 42.

Le réflecteur principal 30 est formé d'une surface de révolution définie par une génératrice formée par une portion d'ellipse dont l'axe de révolution 32 passe au moins sensiblement par un foyer F1 qui coïncide au moins sensiblement avec le centre de la source lumineuse 20.

Plus précisément l'axe de révolution 32 du réflecteur principal 30 et incliné par rapport au grand axe passant par les deux foyers de la génératrice en ellipse, de sorte que le réflecteur principal 30 possède un second foyer annulaire sous forme d'un cercle référencé 39 sur les figures annexées.

Plus précisément, la portion d'ellipse du réflecteur principal 30 située à droite de l'axe 32, sur la figure 9, réfléchit le flux reçu de la source 20, sur un point foyer F3 situé à gauche de l'axe 32 ; et inversement la portion d'ellipse du réflecteur principal 30 située à gauche de l'axe 32, réfléchit le flux reçu de la source 20 sur un point foyer F2 situé à droite de l'axe 32.

Le système secondaire 40 comprend en regard de la plage couverte par les rayons renvoyés par le réflecteur principal 30 et passant par le foyer annulaire 39, une calotte réflectrice 44. La calotte 44 est de préférence adjacente à la face avant 45 de la pièce 42. Elle est formée avantageusement d'une surface de révolution autour de l'axe 46 coaxial à l'axe 32, et délimitée par une génératrice en forme de portion de parabole dont le foyer coïncide avec le foyer annulaire 39, pour renvoyer les rayons reçus, perpendiculairement à l'axe 46.

Le système secondaire 40 peut être complété par une calotte centrale 47 formée d'une surface de révolution autour de l'axe 46, définie par une droite ou une portion de conique, ou encore par tout moyen équivalent, tel que lentille de Fresnel, ou optique diffractive adapté pour renvoyer la portion de flux émise par la source 20 dans un cone central non récupéré par le réflecteur principal 30.

En pratique la définition des surfaces 44 et 47 doit tenir compte des réfractions lors du franchissement de la surface arrière 43 de la pièce 40, réfractions dont on n'a pas tenu compte sur la figure 9, pour simplifier l'illustration.

Par ailleurs comme on l'a schématisé sur la figure 9bis, le cas échéant le sommet de la surface 47, centré sur l'axe 46, peut être adapté (aplati par exemple ou arrondi) pour éviter d'occulter les rayons renvoyés par la surface 30 en direction de la calotte 44.

On va maintenant décrire la variante de réalisation illustré sur la figure 10.

Selon cette figure 10, le réflecteur principal 30 est formé par la combinaison, d'une partie arrière en ellipsoïde de révolution 31 et une partie avant 33 en cylindre droit, toutes deux de révolution autour de l'axe 32.

Par ailleurs, le réflecteur secondaire 40 est lui-même formé de deux calottes 410, 430 coopérant respectivement avec les éléments 31 et 33 du réflecteur principal 30, pour renvoyer le flux qu'elles reçoivent en provenance de ces éléments, dans la pièce 42. La calotte 410 est de préférence de révolution autour de l'axe 46 et délimitée par une génératrice en portion de parabole dont le foyer coïncide avec le second foyer de la partie 31.

La calotte 430 est quant à elle de préférence de révolution autour de l'axe 46 et délimitée par une génératrice en portion de parabole dont le foyer annulaire coïncide avec l'image de la source donnée par le cylindre droit 33.

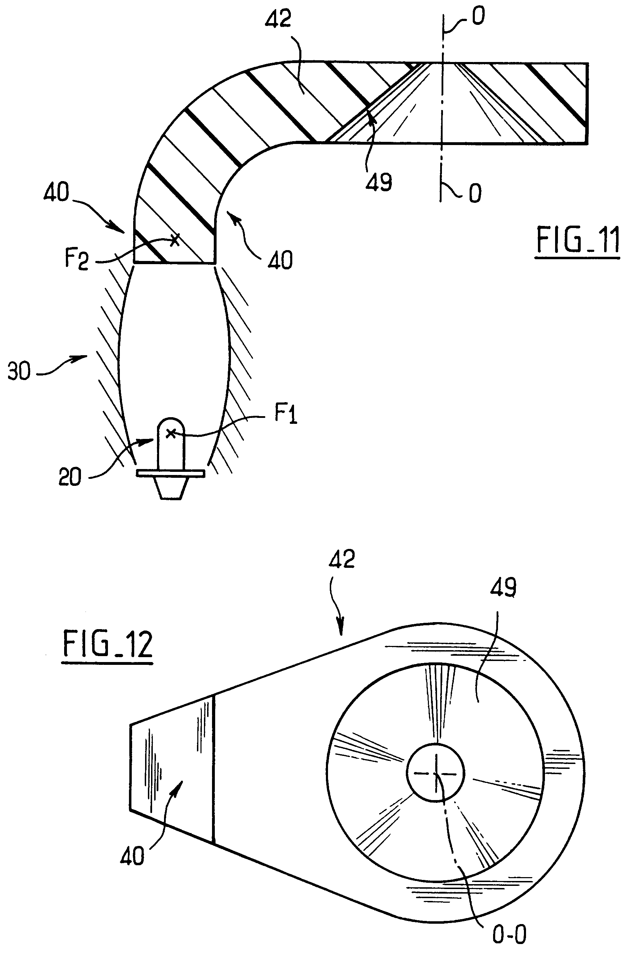

Selon une autre caractéristique avantageuse de la présente invention, comme on l'a illustré sur les figures 11 et 12, les moyens 40 peuvent être formés dans un guide 42 non pas plan mais conformé pour diriger le flux collecté en provenance du réflecteur principal 30 et de la source 20 vers un site d'utilisation par exemple une aiguille.

Selon les figures 11 et 12, le conduit 42 est mui de prismes 49 aptes à renvoyer le flux lumineux vers un moyeu d'aiguille centré sur un axe O-O déporté par rapport à l'axe F1-F2.

Bien entendu la présente invention n'est pas limitée aux modes de réalisation précédemment décrits. L'homme de l'art comprendra que l'inveniton peut faire l'objet de nombreuses variantes de réalisation notamment par combinaison des différents moyens précédemment décrits.

Selon une autre caractéristique avantageuse de la présente invention, la partie de l'optique secondaire 40 coopérant avec le réflecteur principal 30 peut être constitué d'un composant diffractif.

## Revendications

1. Dispositif d'éclairage d'indicateurs, notamment pour tableaux de bord de véhicules automobiles, comportant au moins une source lumineuse (20), caractérisé par le fait qu'il comprend :
- un réflecteur principal (30) de type surface de révolution définie par une génératrice formée par une portion d'éllipse dont l'axe de révolution (32) passe au moins sensiblement par un foyer (F1) qui coïncide lui-même au moins sensiblement avec le centre de la source lumineuse (20), et
- un système optique secondaire (40) placé au moins sensiblement au second foyer du réflecteur principal (30) est adapté pour diriger le flux lumineux reçu du réflecteur principal (30) vers un lieu d'utilisation.

2. Dispositif selon la revendication 1, caractérisé par le fait que le réflecteur principal (30) est de type ellipsoïde de révolution.

3. Dispositif selon la revendication 2, caractérisé par le fait que le réflecteur (30) principal de type ellipsoïde de révolution est défini par une surface engendrée par la rotation d'une ellipse autour du grand axe passant par les foyers d'ellipse.

4. Dispositif selon l'une des revendications 1 à 3, caractérisé par le fait que le système optique secondaire (40) comprend une surface réflectrice de révolution (44).

5. Dispositif selon l'une des revendications 1 à 4, caractérisé par le fait que le réflecteur principal (30) et le système optique secondaire (40) associé sont coaxiaux.

6. Dispositif selon l'une des revendications 1 à 5, caractérisé par le fait que le système optique (40) est formé dans un conduit optique de lumière (42).

7. Dispositif selon l'une des revendications 1 à 6, caractérisé par le fait que l'un au moins du réflecteur principal (30) et du sytème optique secondaire (40) est formé par un moyen choisi dans le groupe comprenant : une métallisation, une réflexion totale sur la surface d'une cavité, ou une pièce réflectrice emboutie.

8. Dispositif selon l'une des revendications 1 à 7, caractérisé par le fait que le système optique secondaire est formé d'un réflecteur dont la génératrice est approximativement une parabole.

9. Dispositif selon l'une des revendications 1 à 7, caractérisé par le fait que le système optique secondaire (40) est formé d'un réflecteur en cône.

10. Dispositif selon l'une des revendications 1 à 7, caractérisé par le fait que le système optique secondaire est formé d'un réflecteur de révolution dont la génératrice est intermédiaire entre une parabole et une génératrice droite.

11. Dispositif selon l'une des revendications 1 à 10, caractérisé par le fait que le système optique secondaire (40) est ménagé dans un conduit (42) pourvu d'un revêtement de peinture blanche sur sa face arrière (43).

12. Dispositif selon la revendication 11, caractérisé par le fait que le revêtement de peinture blanche prévu sur la face arrière (43) du conduit (42) formant le système optique secondaire (40) est réalisée avec un tramage.

13. Dispositif selon l'une des revendications 1 à 12, caractérisé par le fait qu'il comprend un cadran imprimé plaqué contre la face avant (45) d'un conduit (42) dans lequel est ménagé le système optique secondaire (40).

14. Dispositif selon l'une des revendications 1 à 13, caractérisé par le fait qu'il comprend une impression (70) réalisée directement sur la face avant (45) d'un conduit (42) constituant le système optique secondaire (40).

15. Dispositif selon l'une des revendications 1 à 12, caractérisé par le fait que l'un au moins du réflecteur principal (30) et du système optique secondaire (40) est formé par assemblage de plusieurs coquilles.

16. Dispositif selon l'une des revendications 1 à 15, caractérisé par le fait qu'il comprend plusieurs réflecteurs principaux (30), par exemple sur la périphérie du tableau de bord.

17. Dispositif selon l'une des revendications 1 à 16, caractérisé par le fait qu'il comprend en outre une lentille (60) intercalée entre la source lumineuse (20) et le système optique secondaire (40).

18. Dispositif selon la revendication 17, caractérisé par le fait que la lentille (60) est centrée sur l'axe reliant les deux foyers (F1 et F2) du réflecteur (30) principal.

19. Dispositif selon l'une des revendications 17 ou 18, caractérisé par le fait que la lentille (60) a pour fonction de localiser, au moins au voisinage du second foyer (F2) du réflecteur principal (30), le faisceau de rayons émi par la source (20) directement en direction du système optique secondaire (40), sans être renvoyé par le réflecteur (30) principal.

20. Dispositif selon l'une des revendications 17 à 19, caractérisé par le fait que la lentille (60) est formée d'un élément structurellement indépendant de la source (20), du réflecteur principal (30) et du système optique secondaire (40) et que la lentille (60) est supportée par l'un de ceux-ci.

21. Dispositif selon l'une des revendications 17 à 19, caractérisé par le fait que la lentille (60) est intégrée dans le globe de verre de la source lumineuse (20).

22. Dispositif selon l'une des revendications 17 à 19, caractérisé par le fait que la lentille (60) est solidaire, de préférence venue de moulage ou d'usinage, sur la face arrière (43) d'un guide constituant le système optique secondaire (40).

23. Dispositif selon l'une des revendications 17 à 19, caractérisé par le fait que la lentille (60) est solidaire du réflecteur principal (30).

24. Dispositif selon l'une des revendications 17 à 21 et 23, caractérisé par le fait que la lentille (60) est placée au niveau d'un cone dont le sommet est formé par le foyer (F1) qui coïncide avec la source (20) et dont la base est délimitée par un cercle défini par les points d'intersection, d'une part les rayons (F10) émis par la source (20) qui atteignent le bord extrême avant (36) du réflecteur prinicipal (30) adjacent au système optique secondaire (40), et d'autre part les rayons (F12) renvoyés par le bord extrême arrière (37) du réflecteur principal (30).

25. Dispositif selon la revendication 24, caractérisé par le fait que la lentille (60) est placée au niveau de la base du cone.

26. Dispositif selon l'une des revendications 17 à 19 et 22, caractérisé par le fait que la lentille (60) est formée d'une calotte au moins sensiblement sphérique et au moins sensiblement centrée sur le second foyer (F2) du réflecteur (30) principal.

27. Dispositif selon l'une des revendications 1 à 26, caractérisé par le fait que le système optique secondaire (40) comprend au moins une calotte (47) conçue pour dévier au moins sensiblement parallèlement à un guide (42), des rayons (F14) issus directement de la source lumineuse (20) sans être déviée par le réflecteur (30) principal.

28. Dispositif selon la revendication 27, caractérisé par le fait que ladite calotte est formée d'un cone délimité par une génératrice rectiligne.

29. Dispositif selon la revendication 28, caractérisé par le fait que la génératrice délimitant ladite calotte (47) est inclinée de l'ordre de 45° par rapport à l'axe reliant les foyers (F1, F2) du réflecteur principal.

30. Dispositif selon la revendication 27, caractérisé par le fait que ladite calotte (47) est délimitée par une génératrice parabolique.

31. Dispositif selon l'une des revendications 27 à 30, caractérisé par le fait que ladite calotte (47) est placée en avant et sur l'extérieur d'un cercle délimité par l'intersection des rayons (F10) provenant du bord extrême avant (36) du réflecteur principal (30) et une calotte (44) adaptée pour récupérer les rayons renvoyés par le réflecteur principal (30) parallèlement à un guide optique (42).

32. Dispositif selon l'une des revendications 27 à 31, caractérisé par le fait que ladite calotte (47) est adaptée pour récupérer une partie des rayons renvoyés par le réflecteur principal (30).

33. Dispositif selon l'une des revendications 1 à 31, caractérisé par le fait que le système optique secondaire (40) comprend une première surface de révolution (44) à génératrice parabolique, adjacente à la face arrière d'un guide (42) adaptée pour renvoyer parallèlement au guide (42) les rayons qu'elle reçoit en provenance du réflecteur principal (30), et une seconde surface de révolution (47) à génératrice parabolique, adjacent à la face avant (45) du guide (42), adaptée pour renvoyer parallèlement au guide (42) les rayons qu'elle reçoit en provenance de la source (20), sans transiter par le réflecteur principal (30).

34. Dispositif selon l'une des revendications 1 à 33, caractérisé par le fait que le système optique secondaire (40) est formé dans un guide (42) dont le contour extérieur (41) est défini au moins localement par des tronçons d'ellipse (48) dont un premier foyer coïncide avec l'axe (F1, F2) des foyers du réflecteur principal (30) tandis que le second foyer coïncide au moins sensiblement avec un site d'utilisation, par exemple un moyen de prisme (49) adapté pour l'éclairage d'une aiguille indicatrice.

35. Dispositif selon l'une des revendications 1 à 34, caractérisé par le fait que l'un au moins des réflecteurs principaux (30) prévu sur le tableau de bord est formé non pas d'une pièce de révolution sur 360°, mais d'une pièce couvrant un angle limité, inférieur à 360°, autour de l'axe passant par les foyers (F1 et F2) du réflecteur principal (30).

36. Dispositif selon l'une des revendications 1 à 35, caractérisé par le fait que le système optique secondaire (40) comprend un plan ou une calotte incurvée réflectrice en bordure d'une pièce (42) formant guide optique.

37. Dispositif selon l'une des revendications 1 à 36, caractérisé par le fait que le réflecteur principal (30) est formé d'une surface de révolution définie par une génératrice formée par une portion d'ellipse dont l'axe de révolution (32) passe au moins sensiblement par un foyer (F1) qui coïncide au moins sensiblement avec le centre de la source lumineuse (20), lequel axe de révolution (32) est incliné par rapport au grand axe passant par les deux foyers de la génératrice en ellipse, de sorte que le réflecteur principal (30) possède un second foyer annulaire sous forme d'un cercle.

38. Dispositif selon la revendication 37, caractérisé par le fait que le système optique secondaire (40) comprend en regard de la plage couverte par les rayons renvoyés par le réflecteur principal (30) une calotte réflectrice (44), formée avantageusement d'une surface de révolution entoure d'un axe coaxial à l'axe du réflecteur principal (30) et délimitée par une génératrice en forme de portion de parabole dont le foyer coïncide avec le foyer annulaire du réflecteur principal (30).

39. Dispositif selon l'une des revendications 1 à 38, caractérisé par le fait que le réflecteur principal (30) est formé de deux éléments (31, 33) juxtaposés axialement.

40. Dispositif selon la revendication 39, caractérisé par le fait que le réflecteur principal (30) est formé par la combinaison d'une partie arrière en éllipsoïde de révolution (31) et une partie avant (33) en cylindre droit, toutes deux de révolution autour d'un axe commun.

41. Dispositif selon l'une des revendications 39 ou 40, caractérisé par le fait que le réflecteur secondaire (40) est formé de deux calottes (410, 430) coopérant respectivement avec les éléments (31 et 33) du réflecteur principal (30).

42. Dispositif selon la revendication 41, caractérisé par le fait que le réflecteur secondaire (40) comprend une calotte (410) de révolution délimitée par une génératrice en portion de parabole dont le foyer coïncide avec le second foyer de la partie arrière en ellipsoïde de révolution (31) et une calotte (430) de révolution délimitée par une génératrice en portion de parabole dont le foyer annulaire coïncide avec l'image de la source donné par le cylindre droit (33).

43. Dispositif selon l'une des revendications 1 à 42, caractérisé par le fait qu'il comprend en outre un écran thermique entre la source lumineuse (20) et un cadran ou une impression (70) formé sur la face avant d'un guide (42) portant le système optique secondaire (40).

44. Dispositif selon la revendication 43, caractérisé par le fait que l'écran thermique est formé d'un revêtement de surface, par exemple d'une peinture sélective réfléchissant les infrarouges mais transparente au rayonnement visible déposé sur la face arrière (43) du conduit (42).

45. Dispositif selon l'une des revendications 1 à 44, caractérisé par le fait que l'un au moins du réflecteur principal (30) et/ou du système optique secondaire (40) est défini au moins partiellement par une juxtaposition de facettes.

46. Dispositif selon l'une des revendications 1 à 45, caractérisé par le fait que les moyens secondaires (40) sont formés dans un guide (42) non plan mais conformé pour diriger le flux collecté en provenance du réflecteur principal (30) et de la source (20) vers un site d'utilisation, par exemple une aiguille.

47. Dispositif selon la revendication 46, caractérisé par le fait que le guide (42) est muni de prismes (49) apte à renvoyer le flux lumineux vers un site d'utilisation, de préférence, un moyeu d'aiguille, centré sur un axe déporté par rapport à l'axe des foyers (F1 et F2) du réflecteur principal (30).

48. Dispositif selon l'une des revendications 1 à 47, caractérisé par le fait que le système optique secondaire (40) est réalisé au moins partiellement sous forme d'un composant diffractif.

49. Tableau de bord pour véhicules automobiles, caractérisé par le fait qu'il incorpore au moins un dispositif d'éclairage conforme à l'une des revendications 1 à 48.

## Claims

1. Apparatus for lighting instruments, in particular for motor vehicle dashboards, the apparatus including at least one light source (20) and being characterized by the fact that it comprises:
• a main reflector (30) of the type having a circularly symmetrical surface defined by a generator line formed by a portion of an ellipse whose axis of revolution (32) passes at least substantially through a focus (F1) which itself coincides at least substantially with the center of the light source (20); and
• a secondary optical system (40) placed at least substantially at the second focus of the main reflector (30) and adapted to direct the light flux received from the main reflector (30) towards a position of use.

2. Apparatus according to claim 1, characterized by the fact that the main reflector (30) is of the type comprising an ellipsoid of revolution.

3. Apparatus according to claim 2, characterized by the fact that the main reflector (30) of the ellipsoid of revolution type is defined by a surface generated by rotating an ellipse around the major axis passing through the foci of the ellipse.

4. Apparatus according to any one of claims 1 to 3, characterized by the fact that the secondary optical system (40) has a circularly symmetrical reflecting surface (44).

5. Apparatus according to any one of claims 1 to 4, characterized by the fact that the main reflector (30) and the associated secondary optical system (40) share a common axis.

6. Apparatus according to any one of claims 1 to 5, characterized by the fact that the optical system (40) is formed by a light duct (42).

7. Apparatus according to any one of claims 1 to 6, characterized by the fact that at least one of the main reflector (30) and the secondary optical system (40) is formed by means selected from the group comprising: metallization, total reflection on the surface of a cavity, or a reflective stamping.

8. Apparatus according to any one of claims 1 to 7, characterized by the fact that the secondary optical system is formed by a reflector whose generator line is approximately a parabola.

9. Apparatus according to any one of claims 1 to 7, characterized by the fact that the secondary optical system (40) is formed by a cone-shaped reflector.

10. Apparatus according to any one of claims 1 to 7, characterized by the fact that the secondary optical system is formed by a circularly symmetrical reflector whose generator line is intermediate between a parabola and a straight line.

11. Apparatus according to any one of claims 1 to 10, characterized by the fact that the secondary optical system (40) is formed in a duct (42) provided with a coating of white paint on its back face (43).

12. Apparatus according to claim 11, characterized by the fact that the coating of white paint provided on the back face (43) of the duct (42) forming the secondary optical system (40) is made by half-tone printing.

13. Apparatus according to any one of claims 1 to 12, characterized by the fact that it includes a printed dial pressed against the front face (45) of a duct (42) in which the secondary optical system (40) is formed.

14. Apparatus according to any one of claims 1 to 13, characterized by the fact that it includes printing (70) formed directly on the front face (45) of a duct (42) constituting the secondary optical system (40).

15. Apparatus according to any one of claims 1 to 12, characterized by the fact that at least one of the main reflector (30) and the secondary optical system (40) is formed by assembling together a plurality of shells.

16. Apparatus according to any one of claims 1 to 15, characterized by the fact that it comprises a plurality of main reflectors (30), e.g. at the periphery of the dashboard.

17. Apparatus according to any one of claims 1 to 16, characterized by the fact that it further comprises a lens (60) interposed between the light source (20) and the secondary optical system (40).

18. Apparatus according to claim 17, characterized by the fact that the lens (60) is centered on the axis interconnecting the two foci (F1 and F2) of the main reflector (30).

19. Apparatus according to claim 17 or 18, characterized by the fact that the function of the lens (60) is to position, at least in the vicinity of the second focus of the main reflector (30), the beam of rays that is emitted by the source (20) directly towards the secondary optical system (40) without being reflected by the main reflector (30).

20. Apparatus according to any one of claims 17 to 19, characterized by the fact that the lens (60) is formed by an element that is structurally independent of the source (20), of the main reflector (30), and of the secondary optical system (40), and that the lens (60) is supported by one of them.

21. Apparatus according to any one of claims 17 to 19, characterized by the fact that the lens (60) is integrated in the glass bulb of the light source (20).

22. Apparatus according to any one of claims 17 to 19, characterized by the fact that the lens (60) is integral with the back face (43) of a guide constituting the secondary optical system (40), preferably being molded therewith or machined therein.

23. Apparatus according to any one of claims 17 to 19, characterized by the fact that the lens (60) is integral with the main reflector (30).

24. Apparatus according to any one of claims 17 to 21 and 23, characterized by the fact that the lens (60) is placed level with a cone whose apex is formed by the focus (F1) which coincides with the source (20) and whose base is outlined by a circle defined by the points of intersection between firstly the rays (F10) emitted by the source (20) and reaching the extreme front edge (36) of the main reflector (30) adjacent to the secondary optical system (40) and secondly the rays (F12) reflected by the extreme rear edge (37) of the main reflector (30).

25. Apparatus according to claim 24, characterized by the fact that the lens (60) is placed at the base of the cone.

26. Apparatus according to any one of claims 17 to 19 and 22, characterized by the fact that the lens (60) is formed by a cap that is at least substantially spherical and at least substantially centered on the second focus (F2) of the main reflector (30).

27. Apparatus according to any one of claims 1 to 26, characterized by the fact that the secondary optical system (40) comprises at least one cap (47) designed to deflect rays (F14) coming directly from the light source (20) without being deviated by the main reflector (30) so that they propagate at least substantially parallel to a light guide (42).

28. Apparatus according to claim 27, characterized by the fact that said cap is formed by a cone defined by a rectilinear generator line.

29. Apparatus according to claim 28, characterized by the fact that the generator line defining said cap (47) is inclined by about 45° relative to the axis interconnecting the foci (F1, F2) of the main reflector.

30. Apparatus according to claim 27, characterized by the fact that said cap (47) is defined by a parabolic generator line.

31. Apparatus according to any one of claims 27 to 30, characterized by the fact that said cap (47) is placed in front of and on the outside of a circle defined by the intersection of rays (F10) coming from the extreme front edge (36) of the main reflector (30) and a cap (44) adapted to recover the rays reflected by the main reflector (30) parallel to a light guide (42).

32. Apparatus according to any one of claims 27 to 31, characterized by the fact that said cap (47) is adapted to recover a portion of the rays reflected by the main reflector (30).

33. Apparatus according to any one of claims 1 to 31, characterized by the fact that the secondary optical system (40) comprises a first circularly symmetrical surface (44) having a parabolic generator line, adjacent to the back face of a light guide (42) adapted to reflect the rays it receives from the main reflector (30) to propagate parallel to the light guide (42), and a second circularly symmetrical surface (47) having a parabolic generator line, adjacent to the front face (45) of the light guide (42), and adapted to reflect the rays it receives from the source (20) without passing via the main reflector (30) so that they propagate parallel to the light guide (42).

34. Apparatus according to any one of claims 1 to 33, characterized by the fact that the secondary optical system (40) is formed in a light guide (42) whose outline (41) is defined at least locally by segments of an ellipse (48) having a first focus that coincides with the axis (F1, F2) of the foci of the main reflector (30), while the second focus coincides at least substantially with a site of use, e.g. prism means (49) adapted to illuminate the pointer of a dial.

35. Apparatus according to any one of claims 1 to 34, characterized by the fact that at least one of the main reflectors (30) provided on the dashboard is not formed by a circularly symmetrical piece extending over at least 360°, but by a piece that occupies a limited angle of less than 360° about the axis passing through the foci (F1 and F2) of the main reflector (30).

36. Apparatus according to any one of claims 1 to 35, characterized by the fact that the secondary optical system (40) comprises a reflecting plane or curved cap at the margin of a light guide forming piece (42).

37. Apparatus according to any one of claims 1 to 36, characterized by the fact that the main reflector (30) is formed by a circularly symmetrical surface defined by a generator line formed by a portion of an ellipse whose axis of revolution (32) passes at least substantially through a focus (F1) that coincides at least substantially with the center of the light source (20), which axis of revolution (32) is inclined relative to the major axis passing by the two foci of the elliptical generator line so that the main reflector (30) possesses a second focus that is annular, being in the form of a circle.

38. Apparatus according to claim 37, characterized by the fact that the secondary optical system (40) comprises, facing the area covered by the rays reflected from the main reflector (30), a reflecting cap (44) which is advantageously formed by a surface of revolution surrounded by an axis that is coaxial with the axis of the main reflector (30) and defined by a generator line in the form of a portion of a parabola whose focus coincides with the annular focus of the main reflector (30).

39. Apparatus according to any one of claims 1 to 38, characterized by the fact that the main reflector (30) is made up of two axially-juxtaposed elements (31, 33).

40. Apparatus according to claim 39, characterized by the fact that the main reflector (30) is formed by combining a back portion in the form of an ellipse of revolution (31) and a front portion (33) in the form of a right cylinder, both being surfaces of revolution about a common axis.

41. Apparatus according to claim 39 or 40, characterized by the fact that the secondary reflector (40) is made up of two caps (410, 430) co-operating with respective ones of the elements (31 and 33) of the main reflector (30).

42. Apparatus according to claim 41, characterized by the fact that the secondary reflector (40) comprises a circularly symmetrical cap (410) defined by a generator line in the form of a portion of a parabola whose focus coincides with the second focus of the back portion in the form of an ellipsoid of revolution (31), and a circularly symmetrical cap (430) defined by a generator line in the form of a portion of a parabola whose annular focus coincides with the image of the source given by the right cylinder (33).

43. Apparatus according to any one of claims 1 to 42, characterized by the fact that it further includes a heat screen between the light source (20) and a dial or printing (70) formed on the front face of a light guide (42) carrying the secondary optical system (40).

44. Apparatus according to claim 43, characterized by the fact that the heat screen is formed by a surface coating, e.g. selective paint that reflects infrared light but that is transparent to visible light, and that is deposited on the rear face (43) of the light duct (42).

45. Apparatus according to any one of claims 1 to 44, characterized by the fact that at least one of the main reflector (30) and/or the secondary optical system (40) is defined at least in part by juxtaposing facets.

46. Apparatus according to any one of claims 1 to 45, characterized by the fact that the secondary means (40) are formed in a light guide (42) that is not plane but that is configured to direct the light flux it collects from the main reflector (30) and from the source (20) towards a site of use, e.g. a pointer.

47. Apparatus according to claim 46, characterized by the fact that the light guide (42) is provided with prisms (49) suitable for reflecting light flux towards a site of use, preferably the hub of a pointer, centered on an axis that is offset from the axis of the foci (F1 and F2) of the main reflector (30).

48. Apparatus according to any one of claims 1 to 47, characterized by the fact that the secondary optical system (40) is formed at least in part in the form of a diffractive component.

49. A motor vehicle dashboard characterized by the fact that it incorporates at least one lighting apparatus in accordance with any one of claims 1 to 48.

## Patentansprüche

1. Beleuchtungsvorrichtung für Anzeigeninstrumente, insbesondere für Armaturenbretter in Kraftfahrzeugen, mit wenigstens einer Lichtquelle (20), dadurch gekennzeichnet, daß sie aufweist:
- einen Hauptreflektor (30 der Art einer Rotationsfläche, welche von einer Mantellinie definiert ist, die von einein Ellipsenbereich gebildet ist, dessen Umdrehungsachse (32) wenigstens praktisch durch einen Brennpunkt (F1) läuft, welcher selbst wenigstens praktisch mit dem Mittelpunkt der Lichtquelle (20) zusammenfällt, und
- einem zweiten optischen System (40), welches wenigstens praktisch in dem zweiten Brennpunkt des Hauptreflektors (30) angeordnet und dafür eingerichtet ist, den von dem Hauptreflektor (30) empfangenen Lichtstrom zu einem Verwendungsort hin zu leiten.

2. Vorrichtung gemäß Anspruch 1, dadurch gekennzeichnet, daß der Hauptreflektor (30) von der Art eines Umdrehungsellipsoids ist.

3. Vorrichtung gemäß Anspruch 2, dadurch gekennzeichnet, daß der Hauptreflektor der Art eines Umdrehungsellipsoids von einer Fläche definiert ist, welche durch die Umdrehung einer Ellipse um die durch die Ellipsenbrennpunkte laufende, große Achse erzeugt wird.

4. Vorrichtung gemäß einem der Ansprüche 1 bis 3, dadurch gekennzeichnet, daß das zweite optische System (40) eine Umdrehungreflexionsfläche (44) aufweist.

5. Vorrichtung gemäß einem der Ansprüche 1 bis 4, dadurch gekennzeichnet, daß der Hauptreflektor (30) und das verbundene zweite optische System (40) koaxial sind.

6. Vorrichtung gemäß einem der Ansprüche 1 bis 5, dadurch gekennzeichnet daß das optische System (40) in einer optischen Lichtleitung (42) gebildet ist.

7. Vorrichtung gemäß einem der Ansprüche 1 bis 6, dadurch gekennzeichnet daß wenigstens das eine Element aus Hauptreflektor (30) und zweitem optischen System (40) von einem Mittel gebildet wird, welches aus der Gruppe ausgewählt ist, welche aufweist: ein Metallisieren, eine Totalreflexion aufder Fläche einer Vertiefung oder ein gekümpeltes Reflexionsteil.

8. Vorrichtung gemäß einem der Ansprüche 1 bis 7, dadurch gekennzeichnet, daß das zweite optische System von einem Reflektor gebildet ist, dessen Mantellinie näherungsweise eine Parabel ist.

9. Vorrichtung gemäß einem der Ansprüche 1 bis 7, dadurch gekennzeichnet, daß das zweite optische System (40) von einem konisch zulaufenden Reflektor gebildet ist.

10. Vorrichtung gemäß einem der Ansprüche 1 bis 7, dadurch gekennzeichnet, daß das zweite optische System von einem Umdrehungsreflektor gebildet ist, dessen Mantellinie zwischen einer Parabel und einer geraden Mantellinie liegt.

11. Vorrichtung gemäß einem der Ansprüche 1 bis 10, dadurch gekennzeichnet, daß das zweite optische System (40) in einer Leitung (42) angeordnet ist, welche auf ihrer Rückseite (43) mit einer Beschichtung aus weißer Farbe versehen ist.

12. Vorrichtung gemäß Anspruch 11, dadurch gekennzeichnet, daß die Beschichtung aus weißer Farbe, welche auf der Rückseite (43) der das zweite optische System (40) bildenden Leitung (42) angeordnet ist, mit einem Schußeintrag hergestellt wird.

13. Vorrichtung gemäß einem der Ansprüche 1 bis 12, dadurch gekennzeichnet, daß sie eine gedruckte Skala aufweist, welche gegen die Vorderseite (45) einer Leitung (42), in welcher das zweite optische System (40) angeordnet ist, plattiert ist.

14. Vorrichtung gemäß einem der Ansprüche 1 bis 13, dadurch gekennzeichnet, daß sie einen Aufdruck (70) aufweist, welcher direkt auf der Vorderseite (45) einer das zweite optische System (40) bildenden Leitung (42) ausgeführt ist.

15. Vorrichtung gemaß einem der Ansprüche 1 bis 12, dadurch gekennzeichnet, daß wenigstens das eine Element aus Hauptreflektor (30) und zweitem optischen System (40) durch Zusammenbau mehrerer Schalen gebildet wird.

16. Vorrichtung gemäß einem der Ansprüche 1 bis 15, dadurch gekennzeichnet, daß sie mehrere Hauptreflektoren (30), z.B. auf dem Umfang des Armaturenbrettes, aufweist.

17. Vorrichtung gemäß einem der Ansprüche 1 bis 16, dadurch gekennzeichnet, daß sie außerdem eine zwischen die Lichtquelle (20) und das zweite optische System (40) zwischengesetzte Linse (60) aufweist.

18. Vorrichtung gemäß Anspruch 17, dadurch gekennzeichnet, daß die Linse (60) auf der Achse zentriert ist, welche die beiden Brennpunkte (F1 und F2) des Hauptreflektors (30) verbindet.

19. Vorrichtung gemäß einem der Ansprüche 17 oder 18, dadurch gekennzeichnet, daß die Linse (60) die Funktion hat, wenigstens in Nähe des zweiten Brennpunktes (F2) des Hauptreflektors (30), das von der Quelle (20) ausgesandte Strahlenbündel direkt in Richtung des zweiten optischen Systems (40) zu lenken, ohne von dem Hauptreflektor (30) zurückgeworfen worden zu sein.

20. Vorrichtung gemäß einem der Ansprüche 17 bis 19, dadurch gekennzeichnet, daß die Linse von einem strukturell von der Quelle (20), dem Hauptreflektor (30) und dem zweiten optischen System (40) unabhängigen Element gebildet ist, und daß die Linse (60) von einem von ihnen getragen wird.

21. Vorrichtung gemäß einem der Ansprüche 17 bis 19, dadurch gekennzeichnet, daß die Linse (60) in die Glaskugel der Lichtquelle (20) integriert ist.

22. Vorrichtung gemäß einem der Ansprüche 17 bis 19, dadurch gekennzeichnet, daß die Linse (60), vorzugsweise durch Formpressen oder maschinelle Bearbeitung, auf der Rückseite (43) einer das zweite optische System (40) bildenden Führung einstückig ausgebildet ist.

23. Vorrichtung gemaß einem der Ansprüche 17 bis 19, dadurch gekennzeichnet, daß die Linse (60) einstückig mit dem Hauptreflektor (30) ausgebildet ist.

24. Vorrichtung gemaß einem der Ansprüche 17 bis 21 und 23, dadurch gekennzeichnet, daß die Linse auf der Ebene eines Kegels angeordnet ist, dessen Spitze von dem Brennpunkt (F1) gebildet ist, welcher mit der Quelle (20) zusammenfällt, und dessen Grundfläche von einem Kreis begrenzt ist, welcher von den Schnittpunkten einerseits der von der Quelle (20) ausgesandten Strahlen (F10), welche die äußerste, an das zweite optische System (40) anstoßende Vorderkante (36) des Hauptreflektors (30) erreichen, und andererseits der von der äußersten Hinterkante (37) des Hauptreflektors (30) zurückgeworfenen Strahlen (F12) definiert wird.

25. Vorrichtung gemäß Anspruch 24, dadurch gekennzeichnet, daß die Linse (60) auf der Ebene der Grundfläche des Kegels angeordnet ist.

26. Vorrichtung gemäß einem der Ansprüche 17 bis 19 und 22, dadurch gekennzeichnet, daß die Linse (60) von einer wenigstens praktisch kugelförmigen und wenigstens praktisch auf dem zweiten Brennpunkt (F2) des Hauptreflektors (30) zentrierten Kappe gebildet ist.

27. Vorrichtung gemäß einem der Ansprüche 1 bis 26, dadurch gekennzeichnet, daß das zweite optische System (40) wenigstens eine Kappe (47) aufweist, welche dafür eingerichtet ist, direkt von der Lichtquelle (20) ausgesandte Strahlen (F14) wenigstens praktisch parallel zu einer Führung (42) umzulenken, ohne von dem Hauptreflektor (30) abgelenkt zu werden.

28. Vorrichtung gemaß Anspruch 27, dadurch gekennzeichnet, daß die Kappe von einem Kegel gebildet ist, welcher von einer geraden Mantellinie begrenzt ist.

29. Vorrichtung gemäß Anspruch 28, dadurch gekennzeichnet, daß die die Kappe (47) begrenzende Mantellinie in der Größenordnung von 45° bezüglich der Achse geneigt ist, welche die Brennpunkte (F1, F2) des Hauptreflektors verbindet.

30. Vorrichtung gemaß Anspruch 27, dadurch gekennzeichnet, daß die Kappe (47) von einer parabelförmigen Mantellinie begrenzt ist.

31. Vorrichtung gemäß einem der Ansprüche 27 bis 30, dadurch gekennzeichnet, daß die Kappe (47) vorne und auf dem Äußeren eines Kreises angeordnet ist, welcher von dem Schnittpunkt der Strahlen, welche von der äußersten Vorderkante (36) des Hauptreflektors (30) herkommen, und einer Kappe (44) begrenzt ist, welche dafür eingerichtet ist, die von dem Hauptreflektor (30) parallel zu einer optischen Führung (42) zurückgeworfenen Strahlen zurückzugewinnen.

32. Vorrichtung gemäß einem der Ansprüche 27 bis 31, dadurch gekennzeichnet, daß die Kappe (47) dafür eingerichtet ist, einen Teil der von dem Hauptreflektor (30) zurückgeworfenen Strahlen wiederzugewinnen.

33. Vorrichtung gemäß einem der Ansprüche 1 bis 31, dadurch gekennzeichnet, daß das zweite optische System (40) eine erste Umdrehungsfläche (44) mit parabelförmiger Mantellinie, welche an die Rückseite einer Führung (42) anstößt, und welche dafür eingerichtet ist die Strahlen, welche sie von dem Hauptreflektor (30) empfangt, parallel zu der Führung (42) zurückzuwerfen, und eine zweite Umdrehungsfläche (47) mit parabelförmiger Mantellinie aufweist, welche an die Vorderseite (45) der Führung (42) anstößt, und welche dafür eingerichtet ist, die Strahlen, welche sie von der Quelle (20) empfängt parallel zu der Führung (42) zurückzuwerfen, ohne den Hauptreflektor (30) zu passieren.

34. Vorrichtung gemaß einem der Ansprüche 1 bis 33, dadurch gekennzeichnet, daß das zweite optische System (40) in einer Fühhrung (42) gebildet ist, deren Außenumriß (41) wenigstens örtlich von Ellipsenabschnitten (48) definiert ist, deren erster Brennpunkt mit der Achse (F1, F2) der Brennpunkte des Hauptreflektors (30) zusammenfällt, während der zweite Brennpunkt wenigstens praktisch mit einer Benutzungsstelle, z.B. einer Prismavorrichtung (49) zusammenfällt, welche für die Beleuchtung einer Anzeigennadel eingerichtet ist.

35. Vorrichtung gemäß einem der Ansprüche 1 bis 34, dadurch gekennzeichnet, daß wenigstens einer der auf dem Armaturenbrett vorgesehenen Hauptreflektoren (30) nicht aus einem Teil mit einer Umdrehung von 360° gebildet ist, sondern von einem Teil, welches einen begrenzten Winkel unterhalb von 360°, um die durch die Brennpunkte (F1 und F2) des Hauptreflektors (30) laufende Achse abdeckt.

36. Vorrichtung gemäß einem der Ansprüche 1 bis 35, dadurch gekennzeichnet, daß das zweite optische System (40) eine gebogene Reflexionsebene oder -kappe auf dem Rand eines eine optische Führung bildenden Teils (42) aufweist.

37. Vorrichtung gemaß einem der Ansprüche 1 bis 36, dadurch gekennzeichnet, daß der Hauptreflektor (30) von einer Umdrehungsfläche gebildet ist, welche von einer Mantellinie definiert ist, die von einem Ellipsenbereich gebildet ist, dessen Umdrehungsachse (32) wenigstens praktisch durch einen Brennpunkt (F1) läuft, welcher wenigstens praktisch mit dem Mittelpunkt der Lichtquelle (20) zusammenfällt, wobei die Umdrehungsachse (32) bezüglich der durch die beiden Brennpunkte der ellipsenförmigen Mantellinie laufenden, großen Achse geneigt ist, so daß der Hauptreflektor (30) einen zweiten ringförmigen Brennpunkt in Form eines Kreises besitzt.

38. Vorrichtung gemäß Anspruch 37, dadurch gekennzeichnet, daß das zweite optische System (40) gegenüber des von den von dem Hauptreflektor (30) zurückgeworfenen Strahlen bedeckten Bereiches eine Reflexionskappe (44) aufweist, welche vorteilhafterweise von einer Umdrehungsfläche gebildet ist, welche um eine zu der Achse des Hauptreflektors (30) koaxialen Achse liegt und von einer Mantellinie in Form eines Parabelbereiches begrenzt ist, dessen Brennpunkt mit dem ringförmigen Brennpunkt des Hauptreflektors (30) zusammenfällt.

39. Vorrichtung gemaß einem der Ansprüche 1 bis 38, dadurch gekennzeichnet, daß der Hauptreflektor (30) von zwei axial nebeneinanderliegenden Elementen (31, 33) gebildet ist.

40. Vorrichtung gemäß Anspruch 39, dadurch gekennzeichnet, daß der Hauptreflektor (30) von der Kombination eines hinteren Bereiches (31) in Form eines Umdrehungsellipsoids und eines vorderen Bereiches (33) in Form eines geraden Zylinders gebildet ist, wobei beide um eine gemeinsame Achse zu umdrehen sind.

41. Vorrichtung gemaß einem der Ansprüche 39 oder 40, dadurch gekennzeichnet, daß der zweite Reflektor (40) von zwei Kappen (410, 430) gebildet ist, welche jeweils mit den Elementen (31 und 33) des Hauptreflektors (30) zusammenwirken.

42. Vorrichtung gemäß Anspruch 41, dadurch gekennzeichnet, daß der zweite Reflektor (40) eine Umdrehungskappe (410), welche von einer Mantellinie in Form eines Parabelbereiches begrenzt ist, dessen Brennpunkt mit dem zweiten Brennpunkt des hinteren Bereiches in Form eines Umdrehungsellipsoids (31) zusammenfällt, und eine Umdrehungskappe (430) aufweist, welche von einer Mantellinie in Form eines Parabelbereiches begrenzt ist, dessen ringförmiger Brennpunkt mit dem von dem geraden Zylinder (33) erzeugten Bild der Quelle zusammenfällt.

43. Vorrichtung gemäß einem der Ansprüche 1 bis 42, dadurch gekennzeichnet, daß sie außerdem einen Wärmeschild zwischen der Lichtquelle (20) und einer Skala oder einem Aufdruck aufweist, welcher auf der Vorderseite einer das zweite optische System (40) tragenden Führung (42) gebildet ist.

44. Vorrichtung gemäß Anspruch 43, dadurch gekennzeichnet, daß der Wärmeschild aus einer Flächenbeschichtung gebildet ist, welche z.B. aus einer selektiven, die Intrarotstrahlen reflektierenden Farbe besteht, welche aber durchsichtig für die sichtbare Strahlung und auf der Rückseite (43) der Leitung (42) angeordnet ist.

45. Vorrichtung gemaß einem der Ansprüche 1 bis 44, dadurch gekennzeichnet, daß wenigstens ein Element aus Hauptreflektor (30) und/oder zweitem optischen System (40) wenigstens teilweise von nebeneinander angeordneten Facetten definiert ist.

46. Vorrichtung gemäß einem der Ansprüche 1 bis 45, dadurch gekennzeichnet, daß die zweiten Vorrichtungen (40) in einer nicht ebenen Führung (42) gebildet sind, welche dafür eingerichtet ist, den von dem Hauptreflektor (30) und der Quelle (20) kommenden gesammelten Strahlenfluß zu einer Benutzungsstelle, z.B. einer Nadel, hin zu lenken.

47. Vorrichtung gemaß Anspruch 46, dadurch gekennzeichnet, daß die Führung (42) mit Prismen (49) ausgestattet ist, welche geeignet sind, den Lichtfluß auf eine Benutzungsstelle, vorzugsweise einer Nadelnabe, welche auf einer bezüglich der Achse der Brennpunkte (F1 und F2) des Hauptreflektors (30) verschobenen Achse zentriert ist, zurückzuwerfen.

48. Vorrichtung gemaß einem der Ansprüche 1 bis 47, dadurch gekennzeichnet, daß das zweite optische System (40) wenigstens teilweise in Form einer ablenkenden Komponente ausgeführt ist.

49. Armaturenbrett für Kraftfahrzeuge, dadurch gekennzeichnet, daß es wenigstens eine Beleuchtungsvorrichtung gemäß einem der Ansprüche 1 bis 48 umfaßt.
